# EUROPEAN PATENT APPLICATION

(11) **EP 0 791 862 A2**
(43) Date of publication of application: **27.08.1997**
(21) Application number: 97100522.8
(22) Date of filing: 15.01.1997
(51) Int. Cl.: G03G 15/00, H04N 1/21, H04N 1/387, G06T 3/60

(54) **Image data processor**

(30) Priority: 26.02.1996 JP 38114/96
(71) Applicant: KABUSHIKI KAISHA TOSHIBA, Kawasaki-shi, Kanagawa-ken 210 (JP)
(72) Inventor: Hatano, Mitsuru, 1-1-1, Shibaura, Minato-ku, Tokyo (JP); Otaki, Mitsuhiko, 1-1-1, Shibaura, Minato-ku, Tokyo (JP)
(74) Representative: Zangs, Rainer E., Dipl.-Ing.

(57) **Abstract**

An image data processor has an image data memory to which a plurality of image data constituting images are stored. The image data stored in the image data memory is identified and directions of images are recognized. The image data processor further has an operating portion to set image directions at output of image data. The rotation of image data is controlled so that the direction of images are made uniform based on the recognized image directions and output in the direction of images set by the operating portion, and the controlled image data is outputted from the image data processor.

## Description

### BACKGROUND OF THE INVENTION

### 1. Field of the Invention

The present invention relates to a multi-functional image data processor equipped with, for example, copying function, facsimile function and printer function.

### 2. Description of Related Art

As the facsimile function in a multi-functional image data processor equipped with copying function, facsimile function and printer function, generally known heretofore is so-called memory transmission mode, wherein an image read by a scanner is stored into memory once, and then its image data is transmitted.

In the memory transmission mode in the prior art, the relation between a document placement direction and a transmission direction is not related to the direction of character strings described on document, and transmission is started from the portion where reading is started by use of a scanner.

However, in the memory transmission mode, since transmission is started from the portion where reading is started by a scanner as mentioned above, when plural sheets of documents with different horizontal directions are placed onto an automatic document feeder (hereinafter referred to as ADF), the direction of the horizontal directions of output images at receive side appears irregular accordingly. Therefore, a user at receive side had to have trouble to replace the directions of output images in a direction by himself.

As mentioned above, in the memory transmission mode, there has been heretofore a problem that since transmission is started from the portion where reading is started by a scanner as mentioned above, when plural sheets of documents with different horizontal directions are placed onto an ADF, the direction of the horizontal directions of output images at receive side appears irregular accordingly, therefore, a user had to have trouble to put the directions of output images in order by himself.

Japanese Unexamined Patent Publication No. 6-103410 discloses an image data processor wherein output images may be obtained with the direction of respective images put in order on several copy paper sheets. Namely, in this image data processor, CPU reads out image data from image memory, cuts out character area in image, and recognizes character in character directions 0° , 90° , 180° and 270° . On the basis of this character recognition, the direction of characters in image, i.e., the top and bottom of image, and a landscape or a portrait is detected. Then, on the basis of the data of the top and bottom of document image and so on, image data is processed in a rotation processing portion and/or a reduction/enlargement processing portion, thereby output images with uniform image direction are obtained.

However, in the image data processor disclosed in the above Japanese Unexamined Patent Publication No. 6-103410, since the uniformity of image direction is made by the order of document page, therefore, in what direction documents are output depends on how a user set documents. Accordingly, when it is necessary to make output images in a specific direction such as when using staple or so, an excessive burden is loaded on a user. And if a user makes a mistake in setting documents, it is likely to lead to mistake in copying. Especially when to send output through a facsimile, though a user wants to put header at the bottom of image from the relation of transmission image position, a user cannot confirm the direction of output image at his own side, so he may transmit all of it without noticing mistake at all.

### SUMMARY OF THE INVENTION

The object of the present invention is to provide an image data processor that enables to determine output images so as to prevent a mistake in document setting without placing burden on a user when to output images in a uniform direction.

According to the present invention, there is provided an image data processor comprising means for storing a plurality of image data constituting images means for recognizing the directions of the images by identifying the image data stored in the storing means, input means for setting the direction of images at output of the image data, means for controlling the rotation of the image data stored in the storing means so that the directions of images are made uniform based on the image directions recognized by the recognizing means and output in the direction of images set by the setting means, and means for outputting the image data controlled by the controlling means.

Other objects and advantages of the present invention will become apparent from the detailed description to follow taken in conjunction with the appended claims.

### BRIEF DESCRIPTION OF THE DRAWINGS

FIG. 1 is a schematic cross section diagram of an image data processor according to the present invention;
FIG. 2 is a plane view showing an operation panel in the image data processor shown in FIG. 1;
FIG. 3 is a block diagram showing an outline structure of a control circuit in the image data processor shown in FIG. 1;
FIG. 4 is a schematic diagram showing an example of an identification area to identify the top and bottom of document;
FIG. 5 is a schematic diagram showing the rotation conditions to make the image data of types 1 and 2 of document into standard conditions;
FIG. 6 is a schematic diagram showing the rotation conditions to make the image data of types 3 and 4 of document into standard conditions;
FIG. 7 is a flow chart to explain the memory transmission operation in a facsimile function of an image data processor according to the present invention;
FIG. 8 is a schematic diagram showing display examples of a display of an image data processor;
FIG. 9 is a flow chart to explain the operations of image recognition;
FIG. 10 is a flow chart to explain the operations to recognize image directions;
FIG. 11 is a flow chart to explain the operations of parameter comparison;
FIG. 12 is a flow chart to explain the rotation of image data according to character direction;
FIG. 13 is a figure to explain the relations between the direction of document set on a document table and the direction of image data output through an image data processor; and
FIG. 14 is a memory map showing the data array in an image data memory.

### DETAILED DESCRIPTION OF THE PREFERRED EMBODIMENT

The present invention is shown in more details by reference to the following referential example and preferred embodiment wherein.

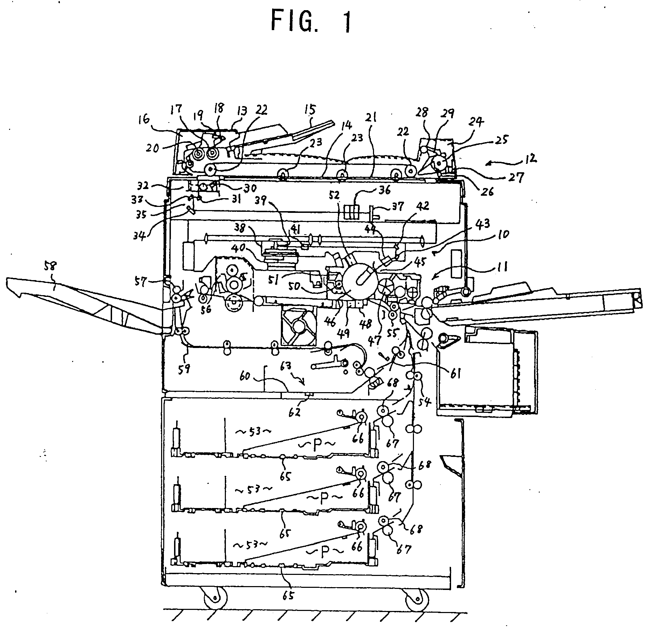

FIG. 1 is a schematic cross section diagram showing the whole structure of an image data processor according to the present invention, having copy function, facsimile function and printer function. This image data processor is equipped with a scanner 10 and a printer 11, and has an automatic document feeder (ADF) 12 at its top portion.

With respect to the ADF 12, the rear end portion of a cover 13 is fixed to the top rear end portion of the device main body via a hinge unit not shown in the figure so that it opens and closes freely. The ADF 12 is so made that it can be rotated and displaced at necessity to open a document table 14. At the top right portion of the cover 13, arranged is a document feed table 15 able to hold plural documents in bulk. At one end of the device, arranged is a feeder unit 16 to take out documents one by one and feed them to one end (the left end in the figure) of the document table 14. The feeder unit 16 is equipped with a pickup roller 17 to take out document, a weight plate 18 to press document onto the pickup roller 17, an empty sensor 19 as a document detection sensor to detect the setting condition of document to the document feed table 15, and so on. Further, at the document takeout direction of the pickup roller 17, arranged is a document feed roller 20, which feeds documents one by one precisely. On the top surface of the document table 14, arranged is a document conveyer belt 21 which covers the top surface. The document conveyer belt 21 consists of a wide endless belt with white external surface engaged onto a pair of belt rollers 20, and be driven in normal and reverse directions by a belt drive mechanism (not shown in the figure). And the rear side of the inner circumference of the document conveyer belt 21 is equipped with plural belt press rollers 23 to press the belt surface onto the document table 14 and a set switch (not shown in the figure) to detect the opening/closing condition of the ADF. The document conveyor belt 21 conveys document fed by the feeder unit 16 from one end (the left end) of the document table 14 to the other end (the right side) of the document table. A document discharge unit 24 is arranged at the right portion of the device. The document discharge unit 24 is associated with a conveyer roller 25, a pinch roller 26 to press document onto this conveyer roller 25, a document discharge sensor 27 as a document detection means to detect the rear end of document that is fed in the document discharge direction. At the downstream side of the document discharge route, arranged is a document discharge roller 28. And on the document discharge route, arranged is a gate 29 to make the right side and wrong side of document reverse and guide document to the document table 14, thereby both the right and wrong sides of document can be copied.

The scanner 10 comprises an exposure lamp 30 as a light source, a first carriage 32 associated with a mirror 31, a second carriage 35 arranged with a mirror 33 and a mirror 34 to refract optical path, a lens 36, a CCD line sensor 37 to receive reflected light, a drive system (not shown in the figure) to change each position of these, and an A/D converter unit (not shown in the figure) to convert the output of the CCD line sensor 37, i.e., image data (information) from analog data into digital data. The first carriage 32 and the second carriages 35 are connected with each other via a timing belt (not shown in the figure), and the second carriage 35 moves in the same direction as the first carriage 32 at the speed of 1/2 of that of the first carriage 32. Thereby, scanning can be made so that the optical path length to the lens 36 should be constant. The lens 36 has a fixed focus distance, and is moved in the optical axis direction when to make a reduction/magnification copy. In the CCD line sensor 37, one pixel of document corresponds to one element of the CCD sensor. The output of the CCD line sensor 37 is output to the A/D converter. The first carriage 32 and the second carriage 35, mirrors 33 and 34 are moved by a stepping motor (not shown) respectively. The first carriage 32 and the second carriage 35 are moved in accordance with the operations of a timing belt (not shown) arranged to a drive pulley (not shown) and a idle pulley (not shown) connected to a rotation axis of the above stepping motor. A spiral shaft (not shown) of the lens 36 is rotated by a stepping motor (not shown) corresponding to it, and this spiral operation moves the lens 36 in optical axis direction.

Reference numeral 38 denotes a semiconductor laser, to which a collimator lens 39, a polygon mirror 40, a lens 41, a reflector 42, a reflector 43, a lens 44 are arranged, and laser beam is applied from the exposure unit 45 to a photosensitive drum 46.

The printer 11 is a combination of, for example, a laser optical system and an electronic photography method able to form image on a sheet of paper. Namely, the printer 11 is equipped with a photosensitive drum 46 as an image carrier supported by axis so as to rotate freely at the center portion of the device. Around the photosensitive drum 46, arranged are an exposure unit 45, a developing unit 47, a transfer charger 48, a separation charger 49, a cleaning charger 50, a charge eliminator 51 and a main charger 52 in order. The photosensitive drum 46 is charged uniformly by the main charger 52, and laser beam is output from the scanner 10 onto the photosensitive drum 46 to form document image, and thereby, an electrostatic latent image is formed.

The electrostatic latent image formed on the photosensitive drum 46 is developed by the developing unit 47, and is transferred by the transfer charger 48 onto a sheet of paper P that is supplied from a paper supply cassette 53 as a paper feeder unit described later via the paper feed roller 54, and an aligning roller 55. The sheet of paper sheet P after transfer by the transfer charger 48 is separated by the separation charger 49 by AC corona discharge, and is conveyed via the conveyor belt to a fixer 56. The sheet of paper P whose developed image is melt and fixed by the fixer 56 is discharged onto a paper receiving tray 58 by an exit roller pair 57.

Developing agent remained on the photosensitive drum 46 after the transfer and separation of developed image to the sheet of paper P is cleaned off by the cleaning charger 50, and electric potential on the photoelectric drum 46 is made below a specific level by the charge eliminator 51, and thereby, next copying operation is prepared.

In the case of copying both the sides and printing on the both sides of sheet of paper P, the sheet of paper P on which developed image is melt and fixed by the fixer 56 is conveyed via a paper conveyer path 59, and is accumulated into a tray 60. The sheet of paper P whose one side has been printed and accumulated into the tray 60 is conveyed via a paper conveyer path 61 to the transfer charger 48, where developed image is transferred onto the other side which has not been printed yet. At the bottom of the tray 60, arranged is a paper sensor 62 of light reflection type, which detects the presence or absence of paper to be stacked onto the tray 60.

The paper conveyer path 59, the tray 60, the paper conveyer path 61 and the paper sensor 62 compose an automatic duplex device (ADD) 63 as an automatic duplex turnover mechanism.

The paper supply cassette 53 as a paper supply means is attached to upper and lower several stages from the front side of the device main body so as to be attached or detached freely. The paper supply cassette 53 consists of a cassette case 65 containing sheets of paper P. The sheets of paper P contained in the cassette case 65 is inclined toward its takeout direction. The sheet of paper P contained in the cassette case 65 of the paper supply cassette 53 is taken out one by one from the top side by a pickup roller 66. The sheet of paper P that is taken out by the pickup roller 66 and sent to the takeout end portion of the cassette case 65 is separated one by one by a paper separation portion comprising a paper feed roller 67 and a paper separation roller 68 arranged at the inside top of the takeout end portion of the cassette case 65, and is conveyed for the printer 11.

At the front top of the scanner 10 and the printer 11 of this image data processor, arranged is an operation panel 69 to operate and input various copy conditions and copy start signal to start coping operation and the like.

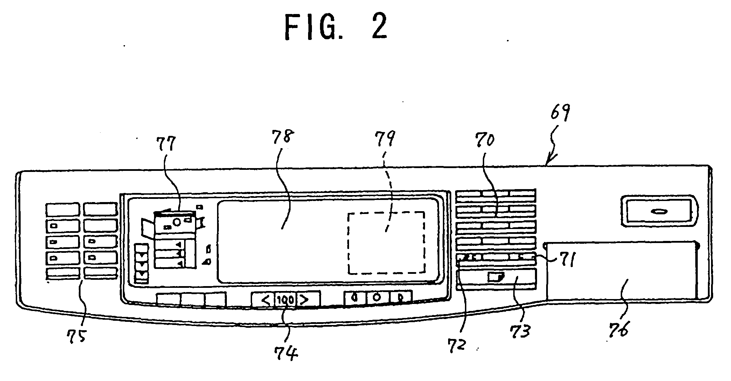

FIG. 2 shows the configuration of the operation panel 69. The operation panel 69 comprises a ten-key 70 to input the number of copies, a clear key 71 to clear data input by the ten-key 70, an all clear key 72 to make copying conditions into the initial status, a start key 73 to command the start of copying operation, a magnification selection key 74 to set copy magnification, a sorter key 75 to set additional sorter operations, various keys 76 to set both side → one side, ADF, turnover unit operation and so on, an LED lamp etc. 77 to display the conditions of copier (no paper, paper jamming, etc.), a display 78 to display operating conditions, and a touch panel 79 arranged on the display 78 to input operating conditions.

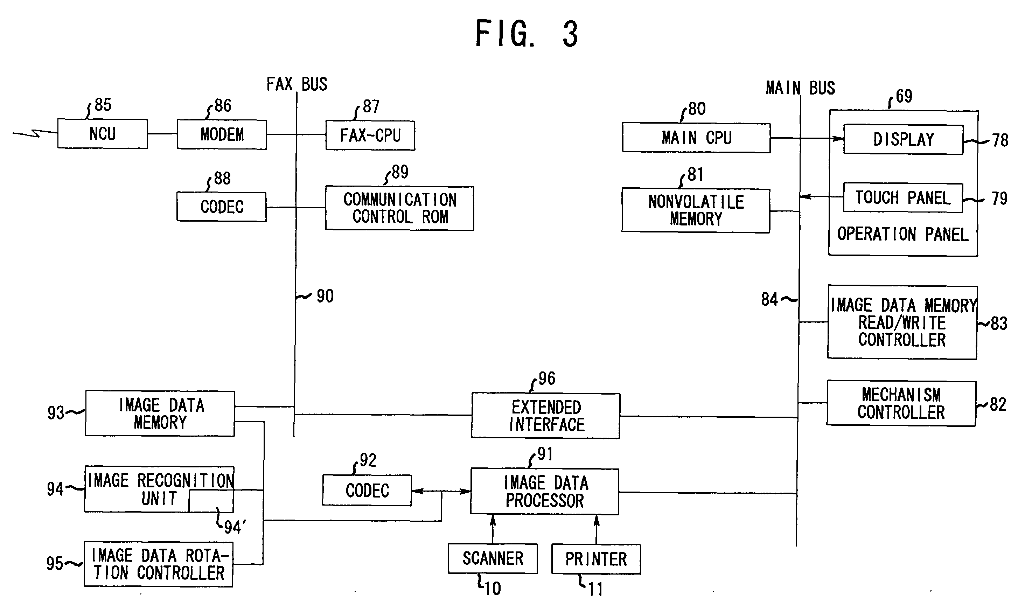

FIG. 3 is a block diagram showing an outline structure of a control circuit in an image data processor under the present invention.

A main CPU 80 to control the whole image data processor, a nonvolatile memory 81 to store various configuration information, a mechanism controller 82 to control mechanism, an image data memory read/write controller 83 to control image data memory, and an operation panel 69 including a display 78 and a touch panel 79 are connected to a main bus 84. The above configuration information means the setting information such as exposure adjustment, sheet of paper front end position adjustment and so on.

A network control unit (NCU) 85 as a network controller connected to a public communication line as a facsimile transmission means, a MODEM 86 as a modulator and demodulator for analog line connection, a FAX-CPU 87 to control facsimile communication, a CODEC 88 as an encoding and decoding unit of binary image data, and a communication control ROM 89 for communication control program are connected to a FAX bus 90.

An image data processing portion 91 connected to the scanner 10 and the printer 11 to pre-process and post-process image data, a CODEC 92 as an encoding and decoding unit of binary image data, an image data memory 93 as an image data memory means, an image recognition unit 94 as a recognition means to recognize the top and bottom directions of image by analyzing the image data stored in the image data memory 93 and recognizing characters described on document, and an image data rotation controller 95 as a control means to carry out rotation processing on the image data memory 93 are connected. The image recognition unit 94 includes a dictionary memory 94' that contains character data to be referred to at pattern matching.

The image data memory 93 is also connected to the FAX bus 90, and the FAX bus 90 and the main bus 84 are connected by an extended interface 96.

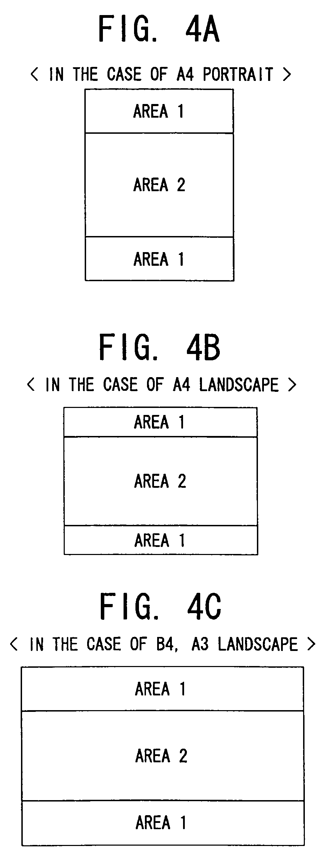

FIG. 4 is a schematic diagram showing an example of an identification area for the image recognition unit 94 in the present embodiment to identify the data stored in the image data memory 93. FIG. 4A shows a case where character data is stored from the left to the right on A4 size, portrait document, and areas 1 are arranged at a portion corresponding to the upper and low ends of paper, while an area 2 is arranged at a portion corresponding to the center of paper. FIG. 4B shows a case where character data is stored from the left to the right on A4 size, landscape document, and areas 1 are arranged at a portion corresponding to the upper and low ends of paper, while an area 2 is arranged at a portion corresponding to the center of paper. FIG. 4C shows a case where character data is stored from the left to the right on B4 and A3 size, landscape document, and areas 1 are arranged at a portion corresponding to the upper and low ends of paper, while an area 2 is arranged at a portion corresponding to the center of paper.

The abovementioned areas 1 generally correspond to header and footer, where in most cases numeric values are recorded as page numbers.

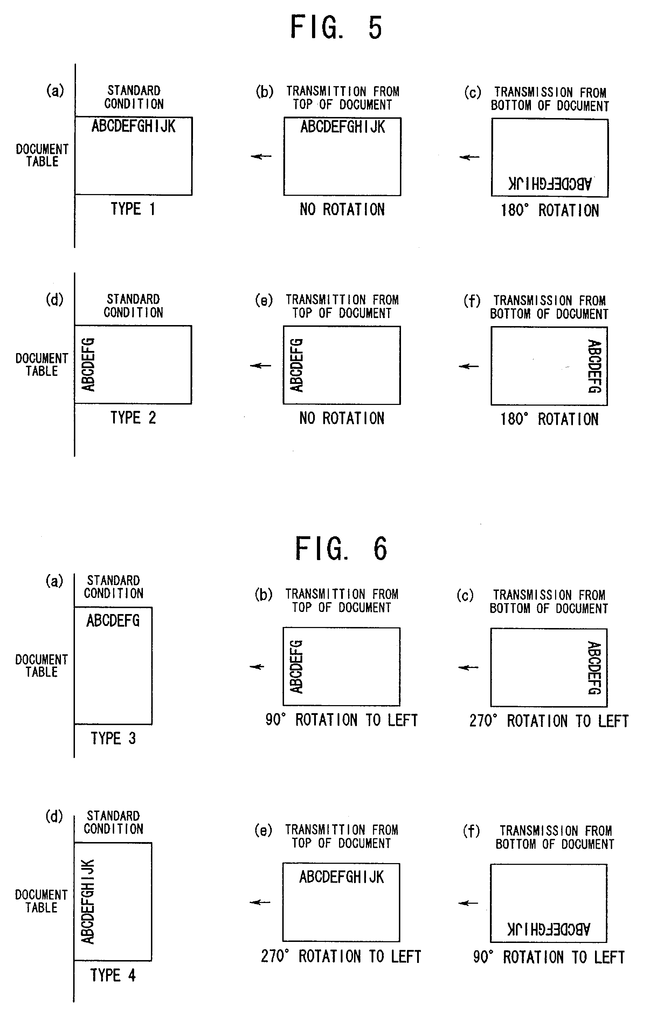

FIGS. 5 and 6 show transmission directions (rotation angles) of image data and standard conditions of each of document types.
(a) in FIG. 5 shows the direction of the standard condition of the document classified into Type 1, and the placed direction of the document to the document table.
(b) in FIG. 5 shows that image data corresponding to the document classified as Type 1 is transmitted in the condition without rotation to the standard condition (a) when "Transmission from top of document" is designated by a user.
(c) in FIG. 5 shows that image data is transmitted where the document classified into Type 1 is rotated by 180° to the standard condition (a), when "Transmission from bottom of document" is designated by the user.
(d) in FIG. 5 shows the direction of the standard condition of the document classified into Type 2, and the placed direction of the document to the document table.
(e) in FIG. 5 shows that image data corresponding to the document classified as Type 2 is transmitted in the condition without rotation to the standard condition (d) when "Transmission from top of document" is designated by the user.
(f) in FIG. 5 shows that image data is transmitted where the document classified into Type 2 is rotated by 180° to the standard condition (d), when "Transmission from bottom of document" is designated by the user.

(a) in FIG. 6 shows the direction of the standard condition of the document classified into Type 3, and the placed direction of the document to the document table.
(b) in FIG. 6 shows that image data is transmitted where the document classified into Type 3 is rotated by 90° to the left for the standard condition (a) when "Transmission from top of document" is designated by the user.
(c) in FIG. 6 shows that image data is transmitted where the document classified into Type 3 is rotated 270° to the left for the standard condition (a), when "Transmission from bottom of document" is designated by the user.
(d) in FIG. 6 shows the direction of the standard condition of the document classified into Type 4, and the placed direction of the document to the document table.
(e) in FIG. 6 shows that image data is transmitted where the document classified into Type 4 is rotated by 270° to the left for the standard condition (d) when "Transmission from top of document" is designated by the user.
(f) in FIG. 6 shows that image data is transmitted where the document classified into Type 4 is rotated by 90° to the left for the standard condition (d), when "Transmission from bottom of document" is designated by the user.

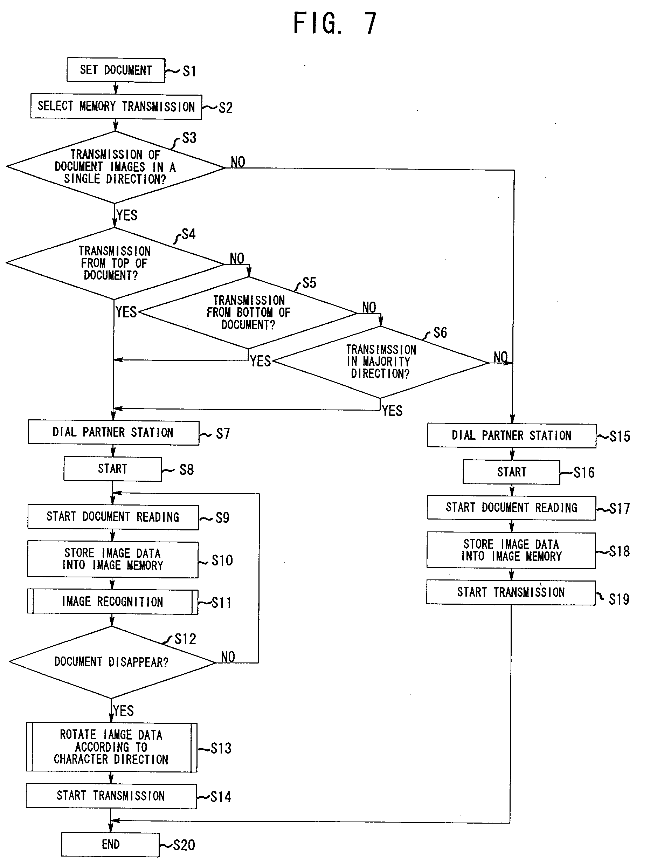

Next, the memory transmission operations of facsimile in such a structure are explained in reference to the flow chart shown in FIG. 7.

First, a user places a document to be transmitted on the document feed table 15 at the ADF 12 (S1), and selects "Memory Transmission" displayed on the touch panel 79 corresponding to the mode selection screen displayed on the display 78 and presses this, and thereby the transmission method is designated to "Memory Transmission" (S2). Then, it is designated whether to put in order the direction to transmit document image or not (S3).

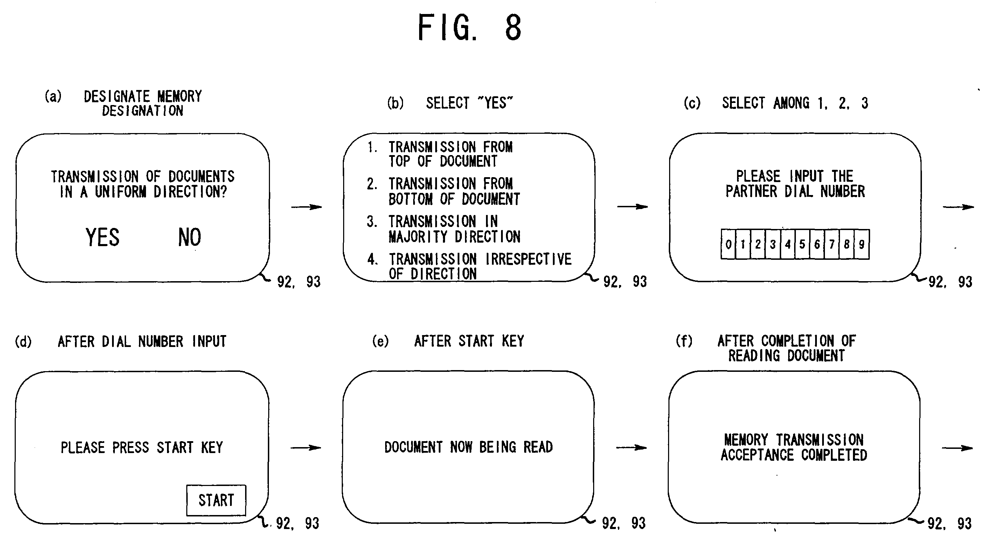

FIG. 8 shows a display example of the display 78 where the touch panel 79 is arranged. In FIG. 8(a), whether to put in order the document direction after memory transmission designation or not is displayed by "Yes" and "No".

When the "Yes" key at the touch panel 79 is pressed down by the user and it is designated to put in order the document image transmission direction, as shown in FIG. 8(b), transmission from the top of document? (S4), transmission from the bottom of document? (S5), or transmission in majority direction? (S6) is displayed on the display 78, and in response to the display, user presses down one of these on the touch panel 79 to designate one of them. In "transmission from the bottom of document" in the step S5, image up to the top margin portion of the document to be transmitted exists, so it is selected when to avoid the case header image (receive date and time, page number, etc.) is overwritten on the top of the received image and image on document is lost. One of the steps S4, S5, and S6 is designated , it becomes the step S7, and as shown in FIG. 8(c), the display 78 gets into the display screen to prompt the input of a dial number of transmission destination.

After the dial number is input by user, as shown in FIG. 8(d), the touch panel 79 of the start key area displayed on the display 78 is pressed down (S8), and according to the instruction from the main CPU 80 by pressing down this start key, the scanner 10 starts reading document (S9). At this moment, the display 78 displays "Document now being read" as shown in FIG. 8(e).

Read image data is stored into the image data memory 93 in accordance with the instruction of the image data memory read/write controller 83(S10).

The image recognition unit 94 carries out analysis on the image data stored in the image data memory 93, that is, pattern matching with the character data stored in the dictionary memory 94' (S11). And it is judged whether the document set on the document table 14 is the last document or not (S12), and if there remains other document, the step goes back to the step S9. And if it is the last document, as shown in FIG. 8(f), "Memory transmission acceptance completed" is displayed on the display 78. In the step S13, the image rotation controller 95 carries out rotation processing of image data on the basis of the designated condition and analysis results.

After connection with partner station, the transmission of the image data that is rotation controlled by the image rotation controller 95 is started under the control of FAX-CPU 87 via FAX bus 90 (S14). FAX-CPU 87 reads out communication control program from communication control ROM 89, and carries out facsimile transmission to partner station by use of CODEC 88, MODEM 86, and NCU 84.

In the step S3, when it is designated not to put in order the document image transmission direction, or "Not to put transmission direction in order" is designated in the step S6, the dial number of transmission destination is input as a normal memory transmission (S15), and the start key 73 is pressed down (S16), and the scanner 10 starts reading document in accordance with the instruction from main CPU 80 (S17).

Read image data is stored into the image data memory 93 in accordance with the instruction of the image data memory read/write controller 83 (S18). After line connection with partner station, the transmission of the image data that is stored in the image data memory 93 is started under the control of FAX-CPU 87 via FAX bus 90 (S19). FAX-CPU 87 reads out communication control program from communication control ROM 89, and carries out facsimile transmission to partner station by use of CODEC 88, MODEM 86, and NCU 84.

When all the image data stored in the image data memory 36 in the step S14 or S19 is transmitted, facsimile transmission operations are completed (S20).

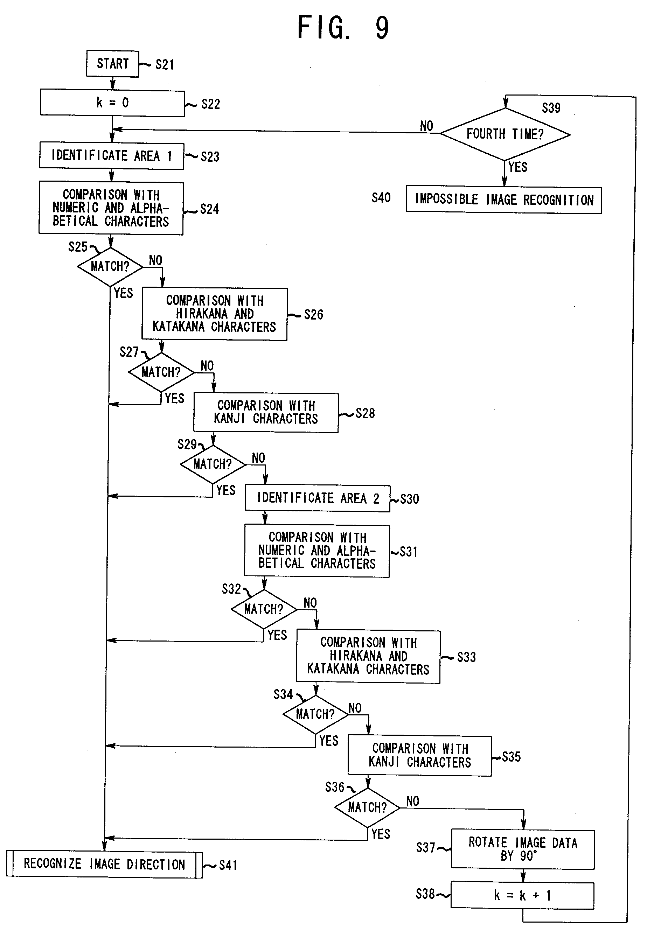

Then, the image recognition operations in the step S11 are explained hereinafter in reference to the flow chart shown in FIG. 9.

Image data analysis is started in the image recognition unit 94 (S21), and the initial image direction is defined as k = 0 (S22). The image recognition unit 94, as explained previously in reference to FIG. 4, starts the comparison of the read image data of area 1 with the character data stored in the dictionary memory 94' , i.e., pattern matching (S23).

The image recognition unit 94 starts the comparison of the numeric and alphabetical characters in the image data of area 1 with the character data stored in the dictionary memory 94' , i.e., pattern matching (S24), and judges whether character directions match or not (S25). In the case of discrepancy, it carries out pattern matching on hiragana and katakana characters in the image data in area 1 (S26), and judges whether character directions match or not (S27). In the case of discrepancy, it carries out pattern matching on kanji characters in the image data in area 1 (S28), and judges whether character directions match or not (S29).

The reason why pattern matching is first carried out on the numeric and alphabetical characters in the image data in area 1 is that in the area 1 page numbers and alphabetical characters are most likely to be used as header or footer.

In the case of discrepancy even in the step S29, the image recognition unit 94 starts pattern matching on area 2 as explained previously in FIG. 4 (S30).

The image recognition unit 39 carries out pattern matching on the numeric and alphabetical characters in the image data of area 2 (S31), and judges whether character directions match or not (S32). In the case of discrepancy, it carries out pattern matching on hiragana and katakana characters in the image data in area 2 (S33), and judges whether character directions match or not (S34). In the case of discrepancy, it carries out pattern matching on kanji characters in the image data in area 1 (S35), and judges whether character directions match or not (S36).

In the case of discrepancy even in the step S36, the image data is rotated by 90° to the left (S37), and the value of k is made "+1" (S38). This value of k corresponds to 90° rotation at image recognition operation, and k = 0 represents no rotation, k - 1 represents 90° rotation, k = 2 represents 180° rotation, and k = 3 represents 270° rotation.

Herein, it is judged whether the rotation of image data is the fourth time (k = 4) or not (S39), if it is before the fourth time, processes from the step S23 are repeated, while if it is the fourth time, it is judged as image recognition impossible (S40).

If it is judged that pattern matching is met one of the steps S25, S27, S29, S32, S34 and S36, character direction has been detected normally, then image recognition is completed, and image direction is recognized in succession (S41).

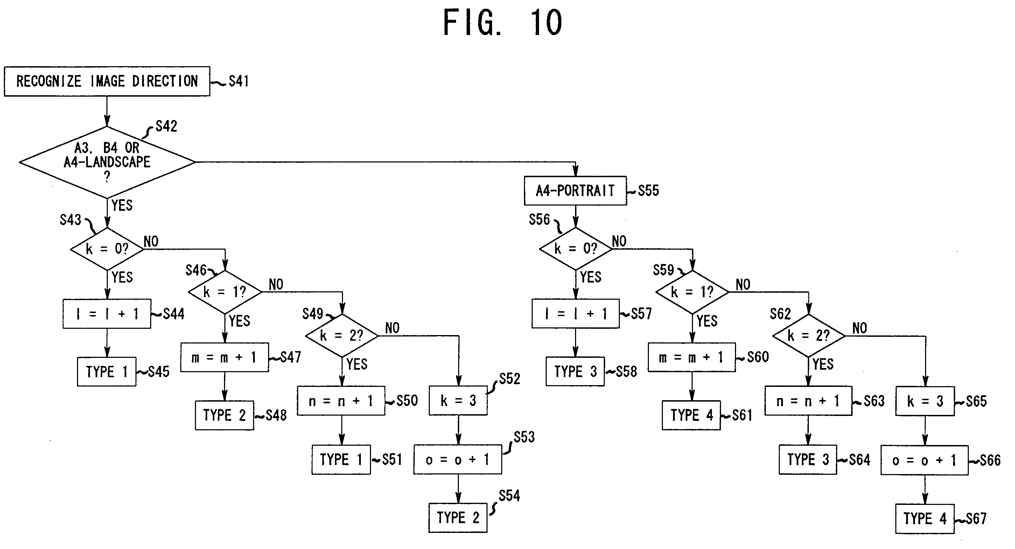

Then, the image direction recognition operations are explained hereinafter in reference to the flow chart shown in FIG. 10.

First, whether the size of document is A3 size, B4 size or A4 size landscape or not is judged (S42). If the document is of A3 size, B4 size or A4 size landscape, then it is judged how many 90° rotations were made at image recognition.

If it is k = 0 representing no rotation (S43), the value of the parameter 1 is added by "+1" and it is classified into type 1 (S44 and S45). If it is k = 1 representing 90° rotation (S46), the value of the parameter m is added by "+1" and it is classified into type 2 (S47 and S48). If it is k = 2 representing 180° rotation (S49), the value of the parameter n is added by "+1" and it is classified into type 1' (S50 and S51). If it is k = 3 representing 270° rotation (S52), the value of the parameter o is added by "+1" and it is classified into type 2' (S53 and S54).

The case where the condition of document set on the document table 14 is that document is placed reversibly to the standard condition of type 1 is defined type 1' . In the same manner, the case where the condition of document set on the document table 14 is that document is placed reversibly to the standard condition of type 2 is defined type 2' .

If document is A4 size portrait (S55), it is judged how many 90° rotations were made at image recognition.

If it is k = 0 representing no rotation (S56), the value of the parameter 1 is added by "+1" and it is classified into type 3 (S57 and S58). If it is k = 1 representing 90° rotation (S59), the value of the parameter m is added by "+1" and it is classified into type 4 (S60 and S61). If it is k = 2 representing 180° rotation (S62), the value of the parameter n is added by "+1" and it is classified into type 3' (S63 and S64). If it is k = 3 representing 270° rotation (S65), the value of the parameter o is added by "+1" and it is classified into type 4' (S66 and S67).

The case where the condition of document set on the document table 14 is that document is placed reversibly to the standard condition of type 3 is defined type 3' . In the same manner, the case where the condition of document set on the document table 14 is that document is placed reversibly to the standard condition of type 4 is defined type 4' .

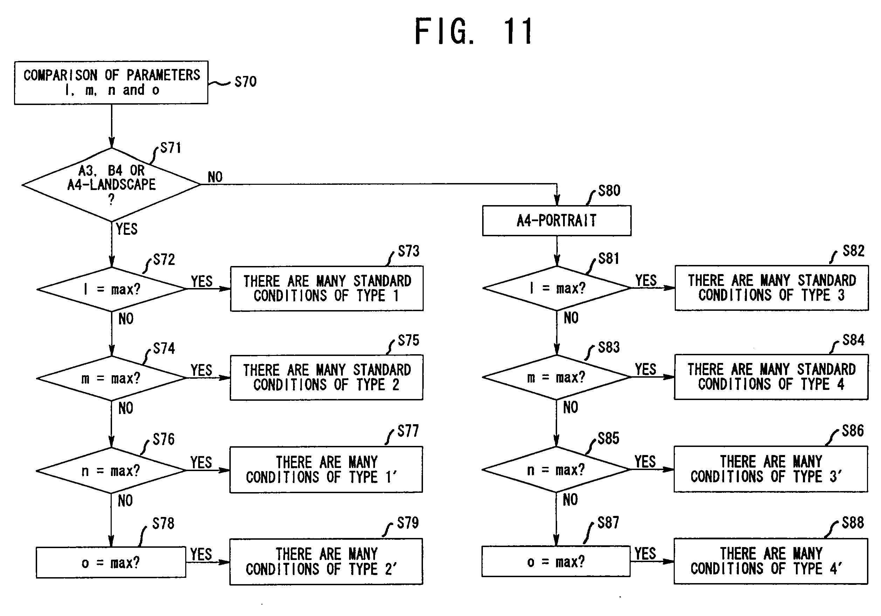

In the next place, the parameter comparison operations are explained hereinafter in reference to the flow chart shown in FIG. 11.

In the step S70, the comparison of the values of the parameters l, m, n, and o is started, and whether the size of document is A3 size, B4 size or A4 size landscape or not is judged (S71).

If the document is of A3 size, B4 size or A4 size landscape, then it is compared which of the parameters l, m, n, and o is largest.

When the parameter l is largest (S72), it is judged that there are many standard conditions of type 1 (S73). When the parameter m is largest (S74), it is judged that there are many standard conditions of type 2 (S75). When the parameter n is largest (S76), it is judged that there are many conditions of type 1' (180° rotation conditions of standard type 1) (S77). When the parameter o is largest (S78), it is judged that there are many conditions of type 2' (180° rotation conditions of standard type 2) (S79).

If it is judged to be document A4 size portrait (S80), it is compared which of the parameters l, m, n and o is largest.

When the parameter l is largest (S81), it is judged that there are many standard conditions of type 3 (S82). When the parameter m is largest (S83), it is judged that there are many standard conditions of type 4 (S84). When the parameter n is largest (S85), it is judged that there are many conditions of type 3' (180° rotation conditions of standard type 3) (S86). When the parameter o is largest (S87), it is judged that there are many conditions of type 4' (180° rotation conditions of standard type 4) (S88).

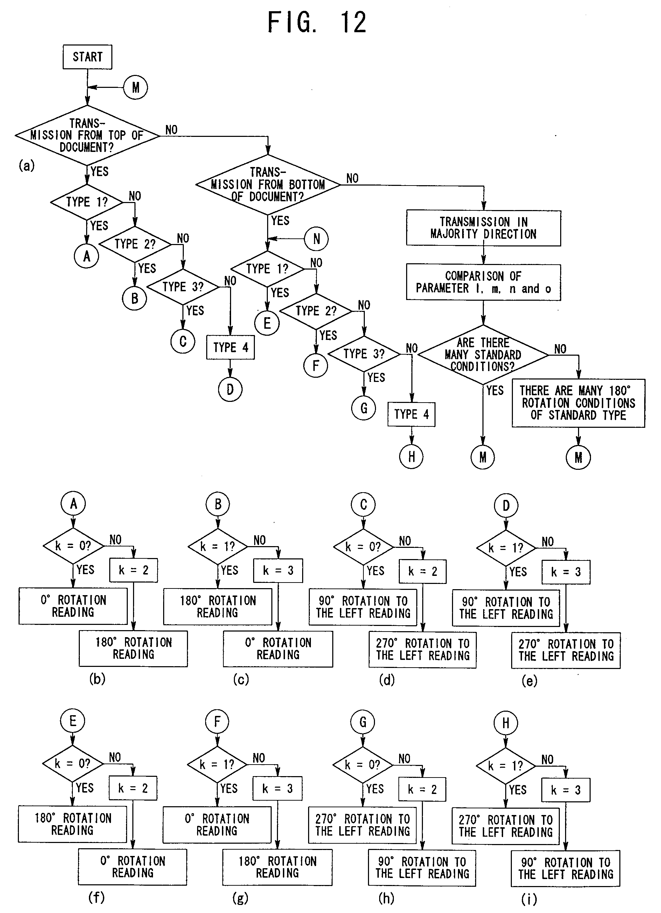

Then, the rotation operations according to the character directions in the step S13 are explained hereinafter in reference to the flow chart shown in FIG. 12. Through the combinations of the types 1 throughout 4 defined in FIG. 10 and the values of k, rotation is realized by changing the calling position from the image data memory 93.

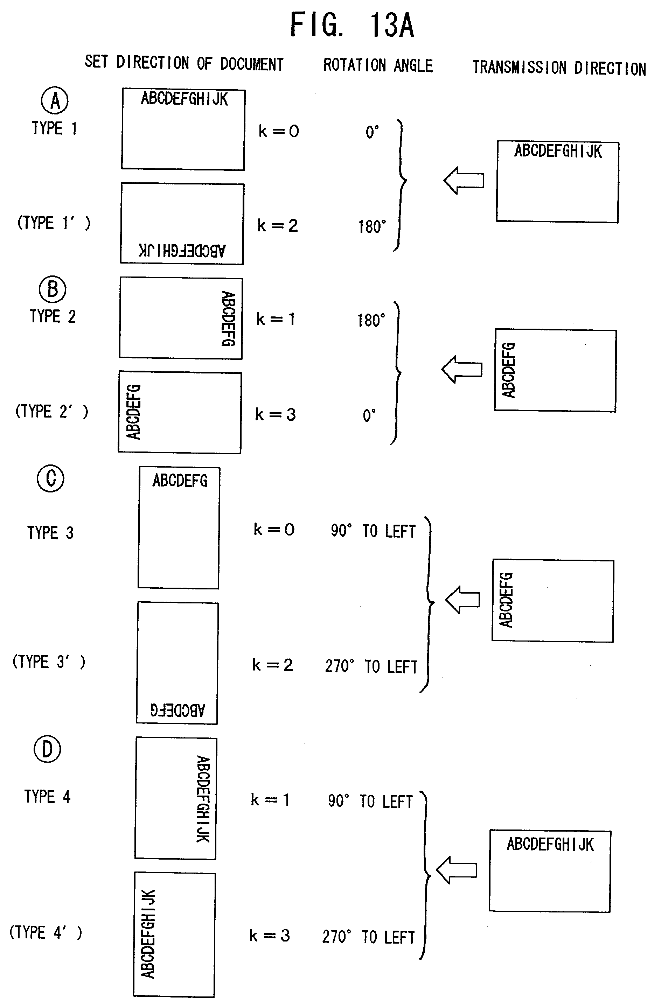

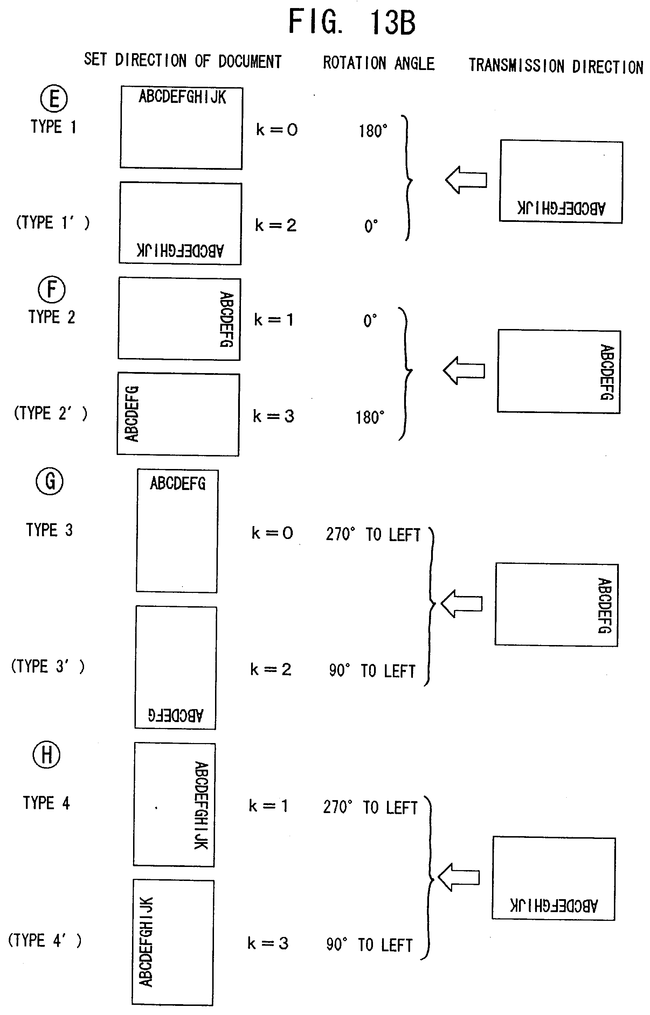

The "Transmission direction" and the arrow mark shown in FIGS. 13A and 13B represent the direction to transmit image data from the image data processor to a facsimile unit at receive side.

When transmission from the top of document is designated, rotation is determined by the types and the values of k as shown in FIG. 12 and FIG. 13A.
1. In the case of type 1 and k = 0, image data is read out by 0° rotation.
2. In the case of type 1 and k = 2, image data is read out by 180° rotation.
3. In the case of type 2 and k = 1, image data is read out by 180° rotation.
4. In the case of type 2 and k = 3, image data is read out by 0° rotation.
5. In the case of type 3 and k = 0, image data is read out by 90° rotation to the left.
6. In the case of type 3 and k = 2, image data is read out by 270° rotation to the left.
7. In the case of type 4 and k = 1, image data is read out by 90° rotation to the left.
8. In the case of type 4 and k = 3, image data is read out by 270° rotation to the left.

When transmission from the bottom of document is designated, rotation is determined by the types and the values of k as shown in FIG. 12 and FIG. 13B.
1. In the case of type 1 and k = 0, image data is read out by 180° rotation.
2. In the case of type 1 and k = 2, image data is read out by 0° rotation.
3. In the case of type 2 and k = 1, image data is read out by 0° rotation.
4. In the case of type 2 and k = 3, image data is read out by 180° rotation.
5. In the case of type 3 and k = 0, image data is read out by 270° rotation to the left.
6. In the case of type 3 and k = 2, image data is read out by 90° rotation to the left.
7. In the case of type 4 and k = 1, image data is read out by 270° rotation to the left.
8. In the case of type 4 and k = 3, image data is read out by 90° rotation to the left.

When transmission is designated by the majority direction of the top and bottom of document, according to the judgment which is are the documents to be transmitted from the top or those to be transmitted from the bottom as a result of the parameter comparison shown in FIG. 11, if there are more standard conditions, rotation reading is carried out as same as in the case of designating transmission from the top, while if there are more 180° rotations of standard conditions, rotation reading out is carried out as same as in the case of designating transmission from the bottom.

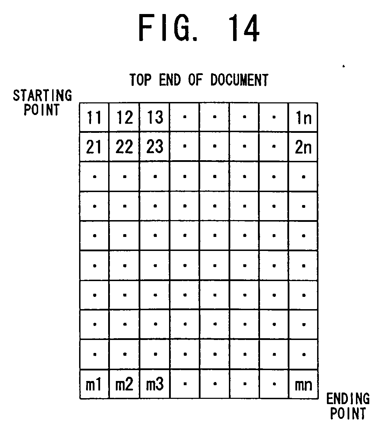

FIG. 14 shows the data array condition in the image data memory 36 from read image data.

The document reading order starts at the left end of the top of document, goes to 11, 12, ..., 1n, 21, 22, ...2n, m1, m2, and ends at mn.

Therefore, the abovementioned rotation operations can be realized by changing the reading position from the image data memory 36.

Namely, in the case of 0° no rotation, it reads as 11, 12, ...1n, 21, 22, ...2n, m1, m2, ...mn.

In the case of 90° rotation to the left, it reads as 1n, 2n, ..mn, 12, 22, ...m2, 11, 21, ...m1.

In the case of 180° rotation, it reads as mn, m2, ..m1, 2n, ...22, 21, 1n, ...12, 11.

In the case of 270° rotation to the left, it reads as m1, ...21, 11, m2, ...22, 12, mn, ...2n, 1n.

As explained heretofore, according to the configuration of the above embodiment of the present invention, when to carry out memory transmission of plural documents by use of an ADF and so on in facsimile function in multi-functional device, even if documents are placed with different directions, read images are classified, thereby rotation operations are conducted in memory to put documents in a single direction, and then transmission is carried out. Therefore, output images at receive side can be put in a specified direction.

As described in details heretofore, according to the present invention, it is possible to provide an image data processor that enables to transmit read images in a specified vertical direction when to carry out memory transmission of plural documents in facsimile function.

As the present invention may be embodied in several forms without departing from the sprit of essential characteristics thereof, the present embodiment is therefore illustrative and not restrictive, since the scope of the invention is defined by the appended claims rather than by the description preceding them, and all changes that fall within meets and bounds of the claims, or equivalence of such as meets and bounds are therefore intended to embraced by the claims.

## Claims

1. An image data processor comprising:
means for storing a plurality of image data constituting images;
means for recognizing the directions of the images by identifying the image data stored in the storing means;
input means for setting the direction of images at output of the image data;
means for controlling the rotation of the image data stored in the storing means so that the directions of images are made uniform based on the image directions recognized by the recognizing means and output in the direction of images set by the setting means; and
means for outputting the image data controlled by the controlling means.

2. An image data processor claimed in claim 1, wherein the recognizing means includes a dictionary memory containing character data, and pattern matching means for comparing the character data in the dictionary memory and the image data stored in the storing means.

3. An image data processor claimed in claim 2, wherein the recognizing means includes means for recognizing the top and bottom directions of the images by using the pattern matching means.

4. An image data processor claimed in claim 2, wherein the recognizing means includes means for recognizing the image data stored in the storing means from plural directions.

5. An image data processor claimed in claim 4, wherein the recognizing means recognizes the image data in no rotation condition, 90° rotation condition, 180° rotation condition, and 270° rotation condition.

6. An image data processor claimed in claims 3 to 5, wherein the recognizing means recognizes the image data in first areas corresponding to the top and bottom portions of images on documents and image data in a second area except the first areas, in the order of the first areas and the second area.

7. An image data processor claimed in claim 1, wherein the setting means includes means for selecting one of an output direction of image data outputted from the top of images, an output direction of image data outputted from the bottom of images, and an output direction corresponding to majority direction of images recognized by the recognizing means.

8. An image data processor claimed in claim 1, wherein the setting means includes means for setting an output direction of image data so that the output image data is outputted from the top of images.

9. An image data processor claimed in claim 1, wherein the setting means includes means for setting an output direction of image data so that the output image data is outputted from the bottom of images.

10. An image data processor claimed in claim 1, wherein the setting means includes means for setting an output direction of image data so that the output direction is corresponded to majority direction of images recognized by the recognizing means.

11. An image data processor claimed in claim 1, wherein the controlling means includes means for controlling the read start position of image data stored in the storing means.

12. An image data processor claimed in claim 11, wherein the read start position is one of a first position of the storing means, a second position rotated by 90° from the first position, a third position rotated by 180° from the first position, and a fourth position rotated by 270° from the first position.

13. An image data processor claimed in claim 1, wherein the outputting means includes facsimile transmission means for transmitting the image data controlled by the controlling means to an external device.

14. An image data processing method including a step of storing a plurality of image data corresponding to images into a memory means, the method comprising the steps of:
recognizing the direction of the images by identifying the image data stored in the memory means;
inputting the direction of images at output of the image data;
controlling the rotation of the image data stored in the memory means so that the directions of images are made uniform based on the image directions recognized by the recognizing step and output in the direction of images input by the inputting step; and
outputting the image data controlled by the controlling step.

15. An image data processing method claimed in claim 14, wherein the recognizing step includes a step of pattern matching to compare character data in a dictionary memory and the image data stored in the memory means.

16. An image data processing method claimed in claim 15, wherein the recognizing step includes a step of recognizing the top and bottom directions of the images by using the pattern matching step.

17. An image data processing method claimed in claim 15, wherein the recognizing step includes a step of recognizing the image data stored in the memory means from plural directions.

18. An image data processing method claimed in claim 17, wherein the recognizing step recognizes the image data in no rotation condition, 90° rotation condition, 180° rotation condition, and 270° rotation condition.

19. An image data processing method claimed in claims 16 to 18, wherein the recognizing step recognizes the image data in first areas corresponding to the top and bottom portions of images on documents and image data in a second area except the first areas, in the order of the first areas and the second area.

20. An image data processing method claimed in claim 14, wherein the inputting step includes a step of selecting one of an output direction of image data outputted from the top of images, an output direction of image data outputted from the bottom of images, and an output direction corresponding to majority direction of images recognized by the recognizing step.

21. An image data processing method claimed in claim 14, wherein the inputting step includes a step of setting an output direction of image data so that the output image data is outputted from the top of images.

22. An image data processing method claimed in claim 14, wherein the inputting step includes a step of setting an output direction of image data so that the output image data is outputted from the bottom of images.

23. An image data processing method claimed in claim 14, wherein the inputting step includes a step of setting an output direction of image data so that the output direction is corresponded to majority direction of images recognized by the recognizing step.

24. An image data processing method claimed in claim 14, wherein the controlling step includes a step of controlling the read start position of image data stored in the memory means.

25. An image data processing method claimed in claim 24, wherein the read start position is one of a first position of the memory means, a second position rotated by 90° from the first position, a third position rotated by 180° from the first position, a fourth position rotated by 270° from the first position.

26. An image data processing method claimed in claim 14, wherein the outputting step includes a step of facsimile transmitting the image data controlled by the controlling step to an external device.
